Europäisches Patentamt

European Patent Office

Office européen des brevets

(11) Numéro de publication : **0 504 080 A1**

# (12) DEMANDE DE BREVET EUROPEEN

(21) Numéro de dépôt : 92440033.6

(22) Date de dépôt : 03.03.92

(51) Int. Cl.⁵ : **B01J 8/18,** B01J 8/42, B01J 20/34

---

(30) Priorité : 04.03.91 FR 9102780

(43) Date de publication de la demande : 16.09.92 Bulletin 92/38

(84) Etats contractants désignés : **BE CH DE ES GB IT LI**

(71) Demandeur : **COMESSA S.A.**
**101 Rue du Rhin Napoléon**
**F-67100 Strasbourg (FR)**

(72) Inventeur : **Cavaille, Roland**
**61 Rue Mélanie**
**F-67000 Strasbourg (FR)**

(74) Mandataire : **Littolff, Denis**
**Meyer & Partenaires, Conseils en Propriété**
**Industrielle, Bureaux Europe, 20, place des**
**Halles**
**F-67000 Strasbourg (FR)**

---

(54) **Système et procédé de régénération à lit fluidisé.**

(57) Système de régénération à lit fluidisé comportant un réacteur (1) composé d'une chambre de fluidisation (3) surmontée d'une hotte (2), dans lequel le produit à traiter est maintenu en suspension par injection d'air, caractérisé en ce que le réacteur (1) est chauffé par un moyen de chauffage indirect (6).

Figure 1

EP 0 504 080 A1

La présente invention concerne un système et un procédé de régénération à lit fluidisé, destiné en particulier à la régénération de l'alumine ayant adsorbé des produits tels que des goudrons.

En effet, il est bien connu d'utiliser l'alumine pour épurer les dégagements gazeux et les fumées au cours de certains processus chimiques. Ainsi, au cours de la fabrication d'électrodes en carbone, destinées par exemple à être utilisées dans la fabrication d'aluminium par électrolyse, il y a des substances goudronneuses comme le brai qui interviennent. Lors de la cuisson de ces électrodes, les fumées dégagées présentent des goudrons que l'on capte par adsorption sur de l'alumine pulvérulente, selon le procédé connu sous le nom de "Dry Scrubbing".

Toutefois, les réglementations actuelles interdisent formellement tout transport de tels produits, c'est à dire de l'alumine ayant adsorbé les goudrons contenus dans les fumées, ainsi que leur stockage dans des décharges.

Il est donc nécessaire de la régénérer en la débarrassant de ses goudrons. Une telle opération peut s'avérer au surplus économiquement intéressante, dans la mesure où l'alumine ainsi régénérée peut resservir à des fins d'adsorption selon le procédé de "Dry Scrubbing".

La régénération est donc intéressante à plus d'un titre, et cela est d'autant plus vrai que les sites sur lesquels elle peut avoir lieu ne sont pas forcément identiques à ceux sur lesquels ont lieu l'élaboration des électrodes. Cette opération de régénération de l'alumine, en soi connue depuis longtemps, est donc importante et nécessaire.

On connait des procédés de régénération de l'alumine basés sur des lits fluidisés, mais qui présentent divers inconvénients de fonctionnement et des rendements qui ne sont pas très élevés.

Ainsi, les deux brevets FR-78 30940 et FR-79 02941 ont trait à un procédé de régénération d'une matière adsorbante se présentant sous forme d'au moins deux composés volatils qui ont une stabilité thermique différente, et qui concerne par conséquent l'alumine.

L'un des composés volatils est calciné dans une première colonne de contact, dans laquelle la matière adsorbante est entraînée et mise en suspension par un courant de gaz oxydant, en y étant porté à une température assez élevée. Puis, à la sortie de cette colonne de contact, on effectue une séparation entre cette matière déjà partiellement épurée et le gaz d'entraînement auquel sont mêlés les produits gazeux désorbés dans cette première colonne de contact.

Dans une seconde colonne de contact, on provoque le refroidissement d'au moins une partie de la matière partiellement épurée, en l'y mettant en suspension. Dans cette seconde colonne, ladite matière est entraînée dans une partie au moins des gaz issus de la séparation mentionnée auparavant. Ces gaz sont refroidis, de telle sorte qu'il peuvent réadsorber en seconde colonne les gaz désorbés en première colonne.

Ces brevets divulguent un certain nombre de perfectionnements additionnels au procédé basique défini ci-dessus, tel que des recyclages de matière à l'entrée de l'une ou l'autre des colonnes de contact afin d'améliorer le rendement du procédé.

Ou encore, des dispositifs additionnels destinés à favoriser l'accomplissement du procédé, tels que des venturi facilitant l'alimentation en courant gazeux, par exemple.

Cependant, le principe de base de ce procédé reste l'élévation de la température du gaz dans lequel le produit est mis en suspension à une température d'environ 900°C. Ledit produit est en contact avec cet air chaud pendant un temps très court.

Cela ne permet pas d'obtenir un produit d'aspect suffisamment proche du produit initial. En d'autres termes, l'efficacité de ce procédé est très relative, et il ne saurait être question de réutiliser l'alumine traitée par son biais pour une autre opération d'adsorption des goudrons avec un résultat comparable.

L'art antérieur en la matière connait également un procédé consistant à faire brûler les goudrons dans un lit fluidisé préchauffé initialement, par combustion du gaz mélangé à l'air de fluidisation.

La température atteinte est donc directement fonction de la quantité de goudron en combustion. Le risque encouru concerne bien entendu la maîtrise du processus, d'autant plus délicate que des paramètres internes sont en cause.

C'est bien ce qui arrive, puisque la température a tendance à s'emballer dès qu'on atteint un seuil de 500°C. Pour la maintenir à un niveau compatible avec les critères de réussite du procédé, en particulier l'obtention d'une bonne surface spécifique, il faut agir par exemple par introduction d'alumine fraîche qui ralentit l'augmentation rapide de la température.

Il est absolument nécessaire de maîtriser l'emballement thermique, sous peine de ne pas réussir à obtenir un produit final de qualité correcte. Il est évident que si, par exemple, la surface spécifique est détériorée, on ne peut plus réutiliser le produit, et une bonne partie de l'avantage attendu du procédé se trouve supprimée.

Avec ce type de procédé, l'inconvénient majeur réside dans le risque d'emballement thermique et la difficulté de le maîtriser. La fiabilité globale du procédé en souffre évidemment.

Le procédé de l'invention, et le système qui permet de le mettre en oeuvre, permettent de résoudre les divers inconvénients énoncés auparavant, et aboutissent de plus à un excellent résultat, puisque le produit obtenu est totalement blanc, et d'une teneur en carbone très faible (inférieure à 0,01 %).

A cet effet, le système de régénération selon la présente invention, qui fonctionne en discontinu, est basé sur le principe connu en soi du lit fluidisé, et comporte un réacteur composé d'une chambre de fluidisation surmonté d'une hotte. Le produit à traiter est maintenu en suspension dans ce réacteur par injection d'air. Ledit réacteur est chauffé par un moyen de chauffage indirect.

Ce moyen de chauffage indirect peut par exemple être un four électrique à moufle, conduisant à une sécurité intrinsèque accrue. L'avantage principal d'un tel chauffage indirect réside dans l'indépendance qui peut exister entre les opérations de chauffage, refroidissement et épuration des gaz générés pendant le traitement.

Le contrôle du processus est ainsi infiniment plus aisé à réaliser.

En outre, la charge du produit n'est jamais en contact avec un combustible, et les risques d'explosion sont par conséquent négligeables. En fait, l'augmentation de la sécurité est le résultant de deux conséquences de cette forme de conception:

– d'une part la séparation entre le moyen de chauffage et l'endroit où a lieu le traitement thermique, et

– d'autre part, l'utilisation de l'énergie électrique qui confère une sécurité structurelle beaucoup plus importante.

Il est à noter que le rendement thermique est lui aussi amélioré de même que la facilité de contrôle et de maîtrise des températures.

Bien entendu, ce moyen de chauffage indirect peut être basé sur une énergie qui n'est pas électrique, à condition que ses caractéristiques soient compatibles avec le procédé en question.

A ce niveau, la conception proposée par l'invention est extrêmement souple et peut être facilement adaptée.

L'utilisation d'un moyen de chauffage indirect constitue donc un avantage qu'il faut considérer comme déterminant à plus d'un titre.

Le réacteur proprement dit est constitué d'une chambre de fluidisation surmontée d'une hotte, elle-même surmontée d'un dispositif de post-combustion destiné à la destruction des composés qui sont vaporisés pendant la phase de chauffage, lequel équipé d'un brûleur à l'une de ses extrémités. Ce dispositif est surtout utile avant que la température du lit fluidisé atteigne le seuil d'auto-inflammation des différents composés.

L'alumine ayant adsorbé des goudrons, au cours d'un procédé de fabrication d'électrodes par exemple, contient par conséquent différents constituants dudit goudron : naphtalène, fluorène, anthracène, fluoranthrène, pyrène, benzoanthracène, benzopyrène... Ceux-ci se vaporisent évidemment lorsque la température atteint un certain seuil.

Le dispositif de post-combustion sert en fait à détruire les gaz apparaissant en phase de chauffage, avant que l'auto-inflammation n'apparaisse.

Lorsque le seuil d'emballement thermique survient, précisément à cause de cette auto-inflammation desdits composés, un dispositif de régulation de la température est mis en oeuvre.

Il s'agit d'un échangeur placé dans la cuve de fluidisation, que l'on alimente en air surpressé de température évidemment bien inférieure à celle qui règne dans ladite cuve. Corrélativement, le moyen de chauffage indirect est inhibé, de sorte que tous les facteurs externes dont on dispose pour empêcher la température d'augmenter sont pris en compte à ce moment.

Additionnellement, le système de régénération comporte des perfectionnements destinés à améliorer la maîtrise du processus. Ainsi, il est possible d'asservir le débit d'air surpressé à la température régnant à l'intérieur de l'enceinte du réacteur.

Bien entendu, le système de l'invention s'insère dans la chaîne traditionnelle de ce genre d'équipement, c'est à dire qu'il y a une trémie d'alimentation en produit à traiter, équipée de systèmes de dosage dudit produit, tout cela étant connu en soi.

En aval du réacteur proprement dit, le produit, une fois le traitement terminé, est envoyé dans un refroidisseur qui peut aussi être un lit fluidisé, ou un échangeur à lit circulant, ou un échangeur à pluie de particules, ou une vis refroidisseuse, ou tout autre système usuellement employé dans ce domaine technique.

Le réacteur lui-même comprend, d'une manière connue en soi, une grille de fluidisation destinée à uniformiser le flux gazeux afin d'optimiser l'opération de fluidisation, cette grille étant placée au dessus d'une boîte à vent située en partie basse de la cuve du réacteur.

Le système qui vient d'être décrit est adapté à la mise en oeuvre du procédé de la présente invention.

Ce procédé, plus particulièrement destiné à la régénération de l'alumine par lit fluidisé, se caractérise par les étapes suivantes :

– on procède au remplissage du réacteur préalablement préchauffé par le produit à traiter, ledit produit y étant fluidisé par un flux d'air ;

– on enclenche le moyen de chauffage indirect;

– lorsqu'on atteint la température d'auto-inflammation des constituants du goudron contenu dans l'alumine, on coupe le moyen de chauffage indirect, et on alimente l'échangeur en air surpressé ;

– on maintient la température à un palier de température situé dans un intervalle déterminé pendant une durée déterminée, appelée premier plateau ;

– on stoppe l'alimentation en air surpressé de refroidissement et on augmente la température jusqu'à atteindre un second palier de température situé dans un intervalle déterminé dans lequel on se maintient pendant une période dite de second plateau ;

– on arrête la chauffe, et on vidange le produit dans un refroidisseur.

Les valeurs optimales testées pour les intervalles de température et les temps de plateaux sont les suivantes:

– le premier plateau dure entre 30 et 60 minutes, pendant lesquelles la température est comprise entre 600° C et 650°C ;

– le second plateau recouvre une période plus brève : entre 5 et 15 minutes pour une température plus élevée, comprise entre 800°C et 850°C.

En fait, les différents constituants des goudrons commencent à se vaporiser aux alentours de 340°C. Il s'agit d'un mécanisme chimique qui est endothermique, comme toute ébullition.

Vers 540°C, les composants ont atteints leur température d'auto-inflammation, et on constate une accélération de la montée en température. Cette combustion provoque un emballement thermique du système qui, s'il n'était pas maîtrisé, conduirait à des températures incompatibles avec la bonne qualité du produit final.

Comme on l'a vu précédemment, ce problème est mal maîtrisé dans les procédés proposés dans l'état de la technique.

En effet, si l'on chauffe le produit sans avoir maintenu un palier de température compris entre 600°C et 650°C, il se forme du coke qui est très difficile à éliminer. Et si l'on maintient le produit pendant plus de 15 minutes à une température supérieure à 800°C, on risque de détériorer la surface spécifique et le produit ne peut plus, comme on l'a déjà souligné, être réutilisé.

L'intérêt de la régulation de température autorisée par l'échangeur immergé dans la chambre de fluidisation est donc évident. C'est un échangeur air/produit fluidisé. L'utilisation d'air est préférable à celle de l'eau pour éviter les "coups de bélier" qui pourraient être dus à la vaporisation brutale de l'eau de refroidissement.

Ce débit d'air est bien entendu régulé pour aboutir à l'objectif recherché, à savoir le maintien de la température à peu près constante dans la couche fluidisée.

Après 30 à 60 minutes de plateau, on constate que la quantité d'air requise pour assurer ce maintien d'une température sensiblement constante est en diminution. Or, à ce stade du traitement, des substances charbonneuses subsistent sur l'alumine, comme en témoigne notamment l'aspect grisâtre du produit. Ces substances sont néanmoins en très faible concentration, inférieure à 0,1 %.

Des essais ont été effectués pour supprimer ces substances en prolongeant la longueur du plateau à 600°C-650°C. Cela s'est toutefois avéré inefficace.

Par contre, une augmentation de cette température, jusque vers 800°C/850°C a conduit à rendre le produit blanc, si cette température est maintenue pendant approximativement 10 minutes.

D'où l'insertion dans le procédé de l'invention du second plateau qui achève le purification du produit.

Les avantages de ce procédé et de son système associé sont multiples. On en a déjà cité quelques uns, plus spécifiquement liés aux dispositifs de mise en oeuvre.

Pour ce qui concerne le procédé en tant que tel, il est à noter qu'il permet d'obtenir une grande homogénéité dans le traitement du produit. Au surplus, les résultats obtenus sont excellents, et on aboutit à une teneur en carbone très faible, puisqu'elle est inférieure à 0,01 %.

Le contrôle parfait de la température et le temps de séjour testé conduisent à une perte en fluor absorbé qui reste inférieure à 12 %, ce qui constitue évidemment un avantage très important: on veut en effet limiter la perte de composés fluorés, car en cas de recyclage de l'alumine, par exemple, il y aurait enrichissement en fluor de l'air traité par le procédé de "Dry Scrubbing", car les gaz issus du régénérateur sont mélangés avec celui-ci. L'efficacité du traitement sera donc diminuée.

Au chapitre des avantages, en ce qui concerne l'appareillage, il faut évoquer le fait que l'échangeur immergé, outre l'excellent contrôle de la température qu'il permet, grâce aux bons coefficients d'échange procurés par les lits fluidisés, évite l'introduction pendant le processus opératoires de charges inertes destinées à annuler, voire inverser, l'emballement thermique.

La construction en acier réfractaire prônée pour l'invention permet de s'affranchir des contraintes d'entretien liées par exemple à la réfection du béton réfractaire installé à l'intérieur des appareillages, comme c'est souvent le cas dans d'autres procédés.

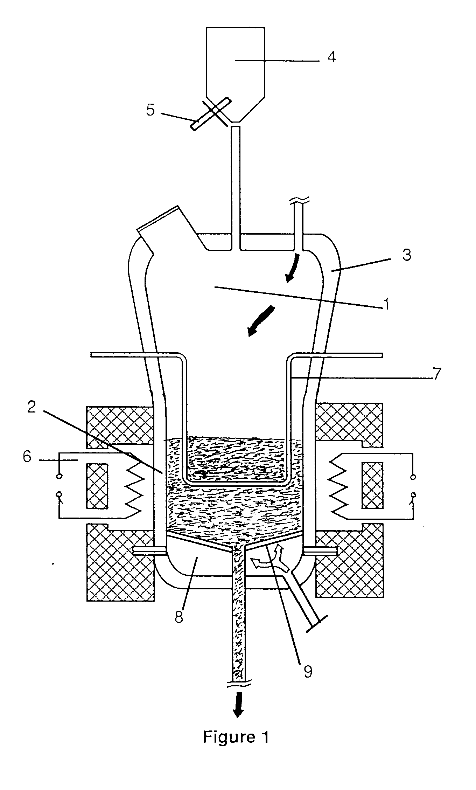

Dans la suite, on va décrire l'invention en se référant à l'unique figure annexée, qui schématise la chaîne des éléments du système permettant la mise en oeuvre du procédé de l'invention.

Le réacteur (1) comprend une chambre de fluidisation (2) surmontée d'une hotte (3), laquelle est placée sous le dispositif de post-combustion (4). En partie basse dudit dispositif, un brûleur (5) permet d'augmenter très rapidement la valeur de la température, et de la porter à 800 °C pendant une durée d'une seconde au minimum.

Autour de la cuve de fluidisation (2) du réacteur (1) un four électrique à moufle (6) assure la montée en température pendant la phase de chauffage.

Ladite cuve de fluidisation (2) est traversée par l'échangeur (7) air/produit à traiter, dont la forme est peu importante. Cela peut être un serpentin, un trombone, des plaques etc....

En partie basse, la boîte à vent (8) est limitée par une grille de fluidisation à buses (9) ou tout autre système dont le but est de répartir uniformément l'air dans la couche fluidisé et d'éviter le tamisage de produit, tout particulièrement pendant le remplissage.

La chambre de fluidisation (2) peut par exemple être constituée par une virole en acier réfractaire, mais tout matériau réfractaire peut convenir. La seule nécessité est que le matériau utilisé à cette fin ait une conductibilité thermique élevée, de manière à pouvoir utiliser un chauffage indirect électrique ou autre.

Un four à chauffage pour combustion est également utilisable, mais le rendement thermique est sensiblement moins bon et les risques liés à l'utilisation de gaz ou de combustibles fossiles sont plus importants que dans le cas de l'utilisation d'électricité.

Dans ce dernier cas, les éléments chauffants peuvent être soit en alliage réfractaire, soit dans un autre matériau, également réfractaire et bien évidemment conducteur, comme par exemple le carbure de silicium.

Ce type de conception autorisant un fonctionnement discontinu, il faut prévoir les effets des changements de condition sur les composants du système. Ainsi, la grille est conçue spécialement pour absorber les contraintes thermiques naissant de ce fonctionnement en discontinu.

Il est encore à noter que la hotte est évasée vers le haut pour limiter la quantité de produit entraîné par les gaz de fluidisation. Cette hotte doit être munie d'un traçage électrique ou, à tout le moins, d'un calorifuge pour éviter la condensation des goudrons sur les parois.

Afin d'éviter au maximum ce risque de condensation des goudrons, susceptible de générer des points noirs dans le produit final, on préchauffe également le réacteur avant le remplissage.

D'une manière générale, les dimensions du réacteur, la puissance du moufle, la surface d'échange sont déterminées en fonction du débit à atteindre, de la teneur en goudron, ainsi que de la granulométrie du produit à traiter.

## Revendications

1. Système de régénération à lit fluidisé comportant un réacteur (1) composé d'une chambre de fluidisation (3) surmontée d'une hotte (2), dans lequel le produit à traiter est maintenu en suspension par injection d'air, caractérisé en ce que le réacteur (1) est chauffé par un moyen de chauffage indirect (6).

2. Système de régénération à lit fluidisé selon la revendication 1, caractérisé en ce que la hotte (2) est surmontée d'un dispositif de post-combustion (4).

3. Système de régénération selon l'une quelconque des revendications précédentes, caractérisé en ce que la chambre de fluidisation (3) comprend un échangeur (7) air/produit interne dans lequel circule de l'air surpressé.

4. Système de régénération selon l'une quelconque des revendications précédentes, caractérisé en ce que le moyen de chauffage indirect (6) est un four à moufle électrique entourant la chambre de fluidisation (3).

5. Système de régénération selon l'une quelconque des revendications précédentes, caractérisé en ce que le dispositif de post-combustion (4) se compose d'une chambre équipée à l'une de ses extrémités d'un brûleur (5).

6. Système de régénération selon l'une quelconque des revendications précédentes, caractérisé en ce que le débit d'air surpressé circulant dans l'échangeur (7) est asservi à la température dans la cuve de fluidisation (3).

7. Système de régénération selon l'une quelconque des revendications précédentes, caractérisé en ce que la hotte (2) est calorifugée.

8. Système de régénération selon l'une quelconque des revendications 1 à 6, caractérisé en ce que la hotte (2) est munie d'un traçage électrique.

9. Procédé de régénération de l'alumine par lit fluidisé dans un système selon l'une quelconque des revendications précédentes, afin d'y éliminer les composés du goudron, caractérisé en qu'il comprend les étapes suivantes :
   – remplissage du réacteur (1) préalablement préchauffé par le produit à traiter, ledit produit y étant fluidisé par un flux d'air ;
   – déclenchement du moyen de chauffage (6) indirect;
   – lorsque la température d'auto-inflammation des composés du goudron dans l'alumine est atteinte, désactivation du moyen de chauffage indirect (6), et alimentation de l'échangeur (7) en air surpressé ;
   – maintien de la température à un palier de température situé dans un intervalle déterminé pendant une durée déterminée, dite de premier plateau ;
   – fin l'alimentation en air surpressé de refroidissement et augmentation de la température jusqu'à un nouveau palier de température situé dans un intervalle déterminé, pendant une période dite de second plateau ;
   – arrêt du chauffage, et vidange du produit à traiter dans un refroidisseur.

10. Procédé de régénération selon la revendication précédente, caractérisé en ce que la température de premier plateau est comprise dans un intervalle allant de 600° C à 650°C.

11. Procédé de régénération selon l'une des revendications 9 et 10, caractérisé en ce que le premier plateau dure de 30 à 60 minutes.

12. Procédé de régénération selon l'une quelconque des revendications 9 à 11, caractérisé en ce que la température du second plateau est comprise entre 800°C et 850°C.

13. Procédé de régénération selon l'une quelconque des revendications 9 à 12, caractérisé en ce que le second plateau dure entre 5 et 15 minutes.

Figure 1

Office européen
des brevets

**RAPPORT DE RECHERCHE EUROPEENNE**

Numero de la demande

EP    92 44 0033

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | DE-A-2 815 960 (PROCEDYNE CORP.) <br> * page 5, alinéa 1 * <br> * page 9, alinéa 8 - page 12, alinéa 1 * <br> * figures 1,2 * | 1,4,7 | B01J8/18 <br> B01J8/42 <br> B01J20/34 |
| A | | 9 | |
| A | DE-A-2 737 117 (KOBE STEEL) <br> * page 4, alinéa 1 * <br> * page 6, alinéa 2 -alinéa 3 * <br> * page 13, alinéa 4 - page 15, alinéa 1 * <br> * figure 3 * | 1,4,9,10 | |
| A | FR-A-1 253 671 (CAMAG CHEMIE-ERZEUGNISSE UND ADSORPTIONSTECHNIK) <br> * le document en entier * | 1,9 | |
| A | EP-A-0 100 554 (UNION CARBIDE CORPORATION) <br> * abrégé; figure * | 3,6 | |

**DOMAINES TECHNIQUES RECHERCHES (Int. Cl.5)**

B01J
C10B

Le présent rapport a été établi pour toutes les revendications

| Lieu de la recherche | Date d'achèvement de la recherche | Examinateur |
|---|---|---|
| LA HAYE | 11 JUIN 1992 | STEVNSBORG N. |